# EUROPÄISCHE PATENTANMELDUNG

(11) **EP 0 609 498 A1**
(43) Veröffentlichungstag der Anmeldung: **10.08.1994**
(21) Anmeldenummer: 93117476.7
(22) Anmeldetag: 28.10.1993
(51) Int. Cl.: B29B 13/06, F26B 17/10, F26B 17/14, F26B 17/22, B29K 61/20, B29K 101/10

(54) **Trockner für duroplastisches Granulat**

(30) Priorität: 28.10.1992 DE 9214641 U
(71) Anmelder: ANNELIESE CRAMER TROCKNERBAU, D-58566 Kierspe (DE)
(72) Erfinder: Cramer, Susanne, D-58566 Kierspe (DE)

(57) **Zusammenfassung**

Ein Trockner für duroplastisches Granulat, dessen vertikal ausgerichteter zylindrischer Mischbehälter im Mantel einen kopfseitigen Schüttkanal für das zu trocknende Granulat, einen fußseitigen Auslaß für das getrocknete Granulat, eine Einlaßleitung für die Trockenluft und eine Auslaßleitung für die Abluft aufweist. Das technische Problem ist die Ausbildung eines Trockners im Sinne einer Entfernung des Staubanteils unter Verbesserung der Trockeneffektivität. Insbesondere sollen Harnstoffharze, Melaminharze und Phenolharze hinsichtlich der Verarbeitbarkeit und der Eigenschaften von Formteilen aus diesen Harzen verbesert werden. Etwa in der Mischbehälterachse ist eine angetriebene Welle (9) mit Rührflügeln (25) und mit einer Verteilerscheibe (13) im Kopfbereich vorgesehen, ein Kanal für die Trockenluft mündet durch den Mantel in die Welle (9) mündet, und im Fußbereich der Welle (9) sind in Höhe der Granulatschüttung (14) Blasöffnungen vorgesehen.

## Beschreibung

Die Erfindung betrifft einen Trockner für duroplastisches Granulat, dessen vertikal ausgerichteter zylindrischer Mischbehälter im Mantel einen kopfseitigen Schüttkanal für das zu trocknende Granulat, einen fußseitigen Auslaß für das getrocknete Granulat, eine Einlaßleitung für die Trockenluft und eine Auslaßleitung für die Abluft aufweist.

Duroplastisches Granulat enthält einen hohen Staubanteil. Dieser erschwert die Trocknung, Behandlung und Verarbeitung des Granulats, da das Schüttgut infolge des Staubanteils zusmmenbackt. Bei der Preßformung des Duroplastmaterials ist der Staub hinderlich. Auch aus Gesundheitsgründen ist eine saubere Staubabscheidung erforderlich.

Aufgabe der Erfindung ist die Ausbildung eines Trockners im Sinne einer Entfernung des Staubanteils unter Verbesserung der Trockeneffektivität. Insbesondere sollen Harnstoffharze, Melaminharze und Phenolharze hinsichtlich der Verarbeitbarkeit und der Eigenschaften von Formteilen aus diesen Harzen verbesert werden.

Diese Aufgabe wird nach der Erfindung dadurch gelöst, daß etwa in der Mischbehälterachse eine angetriebene Welle mit Rührflügeln und mit einer Verteilerscheibe im Kopfbereich vorgesehen ist, daß ein Kanal für die Trockenluft durch den Mantel in die Welle mündet und daß im Fußbereich der Welle in Höhe der Granulatschüttung Blasöffnungen vorgesehen sind.

Die Erfindung unterscheidet sich insofern vom Stand der Technik, als das Rühren während der Trocknung ein Zusammenbacken des Staübanteils mit dem Granulat verhindert. Die zentrale Einblasung der Luft führt zu einer effektiven Trocknung. Alle Einsatzteile sind an dem Kanal angebracht und von demselben getragen. Hierdurch wird die Reinigung des Behälterraumes erleichtert. Infolge der Trocknung ist das Granulat auch vorerwärmt. Die Preßformung erfolgt in diesem vorerwärmten Zustand.

Durchgeführte Versuche haben bei Hanrstoffharzen eine wesentliche Verkürzung der Aushärtezeit bis zu 30 % ergeben. Bei Harnstoffharzen, Melaminharzen und Phenolharzen ergibt sich eine Erhöhung der Festigkeit und eine Verringerung der Schrumpfung von Formteilen.

Eine Vormärmung des Mischbehälters ist dadurch möglich, daß der Mischbehälter doppelwandig unter Bildung eines Mantelraumes zum Durchleiten der Trockenluft durch den Mantelraum ausgebildet ist. Dadurch wird die Effektivität der Trocknung weiter erhöht, weil der Wärmeabfluß durch den Doppelmantel herabgesetzt wird.

Alle Einsatzteile sind dadurch gmeinsam aus dem Mischraum heraushebbar, daß ein Flansch des Kanals in eine an eine Einlaßleitung anschließende Aufnahme des Mantels einhängbar ist. Hierdurch wird die Reinigung der Innenwandung des Mischraum wesentlich vereinfacht. eine Umrüstung auf eine andere Zusammensetzung des Mischgutes ist leicht möglich.

Eine gleichmäßigere Verteilung wird dadurch ermöglicht, daß an dem Kanal ein Traglager für die Verteilerscheibe und die Welle sitzt.

Die gleichmäßige Verteilung des zugeführten Granulats wird dadurch verbessert, daß auf der Welle eine nach innen abfallende Scheibe mit zentralem Durchlaß vorgesehen ist, auf die der Schüttkanal für das Granulat ausgerichtet ist. Der Neigungswinkel der Scheibe beträgt höchstens 11°, damit eine langsame Verteilung des Granulats sichergestellt ist.

Ein Anhaften des Granulats an der Scheibe wird dadurch verhindert, daß an dem Kanal Abstreifer und/oder Pulsatoren für die Scheibe gehalten sind.

Ein ungehinderter Strom der Abluft wird dadurch ermöglicht, daß in dem Mantel versetzt zu der Einlaßleitung eine Auslaßleitung vorgehen ist.

Damimt die Scheibe und die andere Verteilerelemente den Abluftstrom nicht behindern, ist vorgesehen, daß die Welle auf der durch die Auslaßleitung gehenden Durchmesserlinie exzentrisch auf der Gegenseite der Auslaßleitung versetzt ist.

Die Staubabfuhr wird dadurch weiter gefördert, daß ein fußseitiges Ventil zur stoßweisen Einleitung von Luft in die zu trocknende Granulatschüttung vorgesehen ist. Diese stoßweise Einleitung führt zu brodelartigen Aufwallungen in Form eines Bubble-Effektes, so daß dadurch der Staub vollständig ausgetragen wird.

Die Abtrennung des Staubes erfolgt derart, daß die Auslaßleitung der Luft in einen Zyklon zur Staubabscheidung mündet.

Ausführungsbeispiele der Erfindung werden anhand der Zeichnungen erläutert, in denen darstellen:
Fig. 1 eine Schemazeichnung eines ersten Trockners,
Fig. 2 ein zweites Ausführungsbeispiel und
Fig. 3 einen Schnitt nach der Linie III-III in Fig. 2.

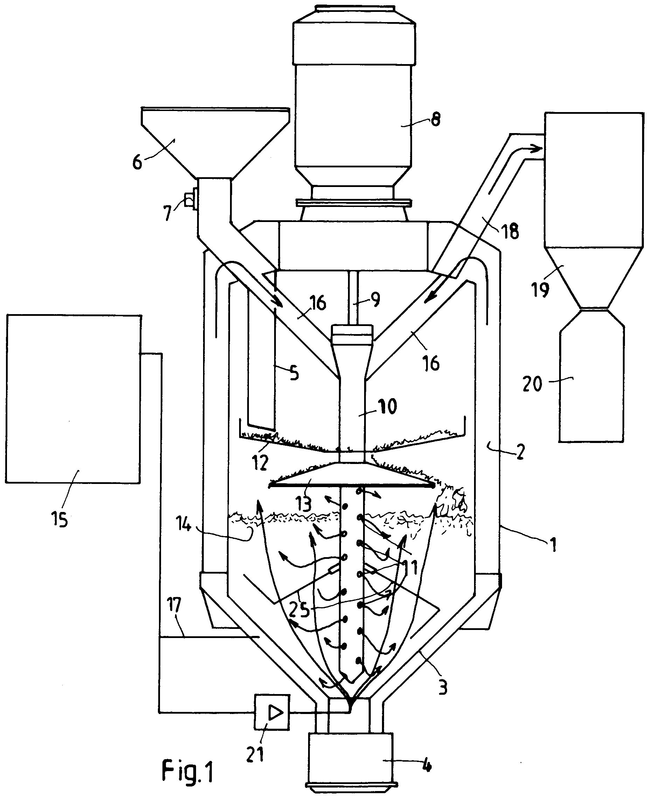

Fig. 1 zeigt einen Trockner mit einem vertikal ausgerichteten zylinderischen Mischbehälter 1, der doppelwandig ausgebildet und dessen Mischraum 30 von einem Mantelraum 2 umgeben ist. Die ständerartige Tragvorrichtung des Trockners ist nicht gezeigt. Der Fußraum 3 des Mischbehälters 1 verjüngt sich zu einem Auslaß 4. Kopfseitig ist ein Schüttkanal 5 für das zu trocknende Granulat vorgesehen. Die Mündung des Schüttkanals 5 ist parallel zur Neigung der noch zu erläuternden Scheibe 12 abgeschnitten, um einen gleichbreiten Austrittsspalt zu gewährleisten. Der Schüttkanal 5 wird über einen Schütttrichter 6 unter der Steuerung eines Fühlers 7 beschickt.

Auf der vertikalen Achse des Mischbehälters 1 ist eine von einem Motor 8 angetriebene Antriebswelle 9 angeordnet. Innerhalb des Mischbehälters 1 ist die Antriebswelle 9 mit einer Hohlwelle 10 gekoppelt. Die Hohlwelle 10 ermöglicht die Durchleitung von Trockenluft, die durch Öffnungen 11 in den Mischraum 30 des Mischbehältera 1 austritt. Auf der Hohlwelle 10 sitzt eine nach innen abfallende Scheibe 12 mit einer Neigung von höchstens 11° und zentralem Durchlaß für das Trockengut und ferner eine nach außen abfallende, konische Verteilerscheibe 13. Im Fußraum 3 des Mischbehälters 1 sammelt sich die jeweilige zu trocknende Granulatschüttung 14 an. Die Hohlwelle 10 trägt schließlich Rührflügel 25.

Eine Trockenluftquelle 15 ist über eine Einlaßleitung 17 an den Mantelraum 2 angeschlossen. Während der Trocknungsdauer wird kontinuierlich Trockenluft eingeblasen. Diese bewegt sich durch den Mantelraum 2, der dabei erwärmt wird, und tritt über die Kanäle 16 in die Hohlwelle 10 ein. An den Kanälen 16 sitzt ein Traglager 31 für die Hohlwelle 10. Die Trockenluft tritt durch Blasöffnungen 11 in die Granulatschüttung 14 aus. Nach Durchqueren der Granulatschüttung 14 und des Mischraumes 30 des Mischbehälters 1 verläßt die Abluft den Mischbehälter 1 durch eine Auslaßleitung 18, die in einen Zyklon 19 zur Staubabscheidung mündet. Der Staub wird in einem Sammler 20 gesammelt.

Schließlich versorgt die Trockenluftquelle 15 über eine leitung 32 ein fußseitig in den Mischbehälter 1 mündendes Ventil 21 zur stoßweisen Einleitung von Luft in die zu trocknende Granulatschüttung 14. Diese Luftstöße dienen zur Auflockerung der Granulatschüttung und zur Mitnahme von Staub.

Die Funktion des Trockners ist folgende: Das duroplastische Granulat, das einen hohen Staubanteil hat, wird über den Schütttrichter 6 und den Schüttkanal 5 eingefült. Der Fühler 7 sperrt die Zufuhr, wenn nicht genügend Granulat abgenommen wird. Das Granulat bewegt sich über die nach innen abfallende Scheibe 12 und wird durch die konische Verteilerscheibe 13 gleichmäßig verteilt, so daß sich eine Granulatschüttung 14 bildet. Die Welle 9 läuft mit etwa 1 Umdrehung pro Minute um, um eine gute Durchmischung zu erzielen. Die geringe Drehzahl verhindert eine Beschädigung oder Beeinträchtigung der duroplastischen Granuli. Die Druckstöße bewirken eine Auflockerung und Aufwirbelung des Staubes in Form eines Bubble-Effektes und verhindern ein Zusammenbacken der Granulatschüttung. Der Staub wird mit der Abluft ausgetragen und in dem Zyklon 19 abgeschieden.

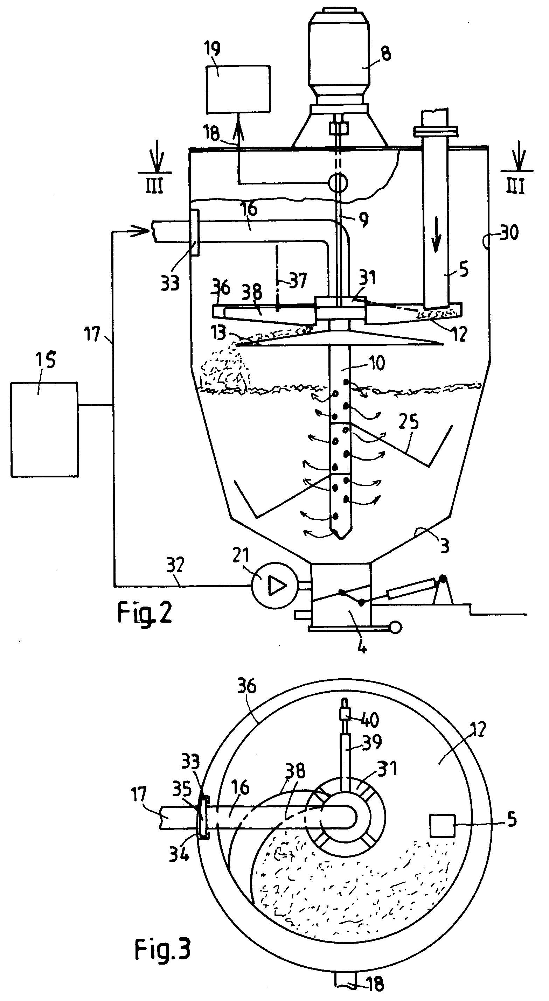

Bei dem Ausführungsbeispiel nach den Fig. 2 und 3 mündet die Einlaßleitung 17 in der Wandung des Mischraums 30. Die Mündung ist von einer rechteckförmigen Aufnahme 33 abgeschlossen, die U-förmimge Aufnahmeschlitze 34 aufweist. Ein Rechteckflansch 35 am Stirnende des Kanals 16 paßt in die Aufnahme 33. An dem Kanal 16 sitzt das Traglager 31, in dem das Rohr 10 drehbar gelagert ist. In das Rohr 10 ist die Antriebswelle 9 einsetzbar. An dem Rohr 10 sind die Scheibe 12 mit einer umlaufenden Randleiste 36 und die Verteilerscheibe 13 befestigt. Dadurch ist ein einfaches Herausnehmen der Einsatzteile aus dem Mischraum 30 gewährleistset, da dieselben alle an dem Kanal 16 befestigt sind.

An dem Kanal 16 hängen an Trägern 36 Abweiser 37, die das Schüttgut von der Verteilerscheibe 13 abstreifen. Ferner ist ein von einer Betätigungsvorrichtung 39 angetriebener Pulsator 40 vorgesehen, der der Randleiste 36 der Scheibe 12 anschlägt und dadurch ein Anhaften des Schüttgutes ausschließt.

Die Auslaßleitung 18 ist gegenüber der Einlaßleitung 17 etwa um 90° in Umfangrichtung versetzt. Die Achse der Hohlwelle 10 auf der Durchmesserlinie durch die Auslaßleitung 18 ist vom Zentrum exzentrisch weggesetzt, so daß der Spalt zwischen der Randleiste 36 der Scheibe 12 im Bereich der Auslaßleitung 18 größer als im gegenüberliegenden Bereich ist. Dadurch wird der aufwärts gerichtete Abluftstorm, der Staubpartikel enthält, im Bereich der Auslaßleitung 18 begünstigt.

## Patentansprüche

1. Trockner für duroplastisches Granulat, dessen vertikal ausgerichteter zylindrischer Mischbehälter im Mantel einen kopfseitigen Schüttkanal für das zu trocknende Granulat, einen fußseitigen Auslaß für das getrocknete Granulat, eine Einlaßleitung für die Trockenluft und eine Auslaßleitung für die Abluft aufweist, dadurch gekennzeichnet, daß etwa in der Mischbehälterachse eine angetriebene Welle (9) mit Rührflügeln (25) und mit einer Verteilerscheibe (13) im Kopfbereich vorgesehen ist, daß ein Kanal für die Trockenluft durch den Mantel in die Welle (9) mündet und daß im Fußbereich der Welle (9) in Höhe der Granulatschüttung (14) Blasöffnungen vorgesehen sind.

2. Trockner nach Anspruch 1 dadurch gekennzeichnet, daß der Mischbehälter (1) doppelwandig unter Bildung eines Mantelraumes (2) zum Durchleiten der Trockenluft durch den Mantelraum ausgebildet ist.

3. Trockner nach Anspruch 1 oder 2, dadurch gekennzeichnet, daß ein Flansch des Kanals in eine an eine Einlaßleitung anschließende Aufnahme des Mantels einhängbar ist.

4. Trockner nach Anspruch 3, dadurch gekennzeichnet, daß an dem Kanal ein Traglager für die Verteilerscheibe und die Welle sitzt.

5. Trockner nach Anspruch 4, dadurch gekennzeichnet, daß auf der Welle (9) außerdem eine nach innen abfallende Scheibe (12) mit zentralem Durchlaß vorgesehen ist, auf die der Schüttkanal (5) für das Granulat ausgerichtet ist.

6. Trockner nach Anspruch 5, dadurch gekennzeichnet, daß der Neigungswinkel der Scheibe (12) höchstens 11° beträgt.

7. Trockner nach Anspruch 5 oder 6, dadurch gekennzeichnet, daß an dem Kanal Abstreifer und/oder Pulsatoren für die Scheibe gehalten sind.

8. Trockner nach einem der Ansprüche 5 bis 7, dadurch gekennzeichnet, daß in dem Mantel versetzt zu der Einlaßleitung eine Auslaßleitung vorgehen ist.

9. Trockner nach Anspruch 8, dadurch gekennzeichnet, daß die Welle auf der durch die Auslaßleitung gehenden Durchmesserlinie exzentrisch auf der Gegenseite der Auslaßleitung versetzt ist.

10. Trockner nach einem der Ansprüche 1 bis 9, dadurch gekennzeichnet, daß ein fußseitiges Ventil (21) zur stoßweisen, einen Bubble-Effekt bewirkenden Einleitung von Luft in die zu trocknende Granulatschüttung (14) vorgesehen ist.

11. Trockner nach einem der Ansprüche 1 bis 10, dadurch gekennzeichnet, daß die Buslaßleitung (18) in einen Zyklon (19) zur Staubabscheidung führt.
